**Europäisches Patentamt**

**European Patent Office**

**Office européen des brevets**

(19)

(11) Veröffentlichungsnummer: **0 110 349**
**B1**

(12) **EUROPÄISCHE PATENTSCHRIFT**

(45) Veröffentlichungstag der Patentschrift:
06.09.89

(51) Int. Cl.⁴: **G 11 B 5/55**

(21) Anmeldenummer: 83111835.1

(22) Anmeldetag: 25.11.83

(54) Anordnung zum Positionieren eines Magnetkopfs auf verschiedene Spuren eines Magnetbands.

(30) Priorität: 29.11.82 DE 3244149
16.05.83 DE 3317719

(43) Veröffentlichungstag der Anmeldung:
13.06.84 Patentblatt 84/24

(45) Bekanntmachung des Hinweises auf die Patenterteilung:
06.09.89 Patentblatt 89/36

(84) Benannte Vertragsstaaten:
DE GB

(56) Entgegenhaltungen:
EP-A- 0 011 831
DE-A- 3 112 895
GB-A- 2 078 434
US-A- 3 183 494

PATENTS ABSTRACTS OF JAPAN, Band 1, Nr. 114, 30.
September 1977, Seite 4257 E 77; & JP - A - 52 45 915

(73) Patentinhaber: TANDBERG DATA A/S,
Kjelsasvelen 161 Postboks 9 Korsvoll,
N-0808 Oslo 8 (NO)

(72) Erfinder: Rudi, Guttorm, Edvard Griegsv. 17,
N-1472 Fjellhamar (NO)

(74) Vertreter: Mehl, Ernst, Dipl.-Ing. et al, Postfach 22 13 17,
D-8000 München 22 (DE)

### Beschreibung

Die Erfindung bezieht sich auf eine Anordnung zum Positionieren eines Magnetkopfs auf verschiedene Spuren eines Magnetbands, entsprechend dem Oberbegriff des Patentanspruchs 1.

Aus der DE-OS 3 112 895 ist bereits eine Anordnung zum Positionieren eines Magnetkopfs in einem Magnetbandgerät bekannt. Bei dieser bekannten Anordnung erfolgt das Positionieren des Magnetkopfs unter Verwendung eines Schneckengetriebes und eines Schraubgetriebes durch einen Antriebsmotor, der als Gleichstrom- oder Schrittmotor ausgebildet sein kann. Das Schneckengetriebe wird aus einer an der Welle des Schrittmotors befestigten Schnecke und einem entsprechenden Schneckenrad gebildet. Das Schraubengetriebe wird aus einem Innengewinde des Schneckenrads und einem entsprechenden Außengewinde einer Achse gebildet. An der Achse ist mittels eines Magnetkopfträgers der Magnetkopf befestigt. Das Schneckenrad ist in axialer Richtung nicht verschiebbar. Wenn der Antriebsmotor über die Schnecke das Schneckenrad dreht, wird, in Abhängigkeit von der Drehrichtung, die Achse aus dem Schneckenrad herausgeschraubt bzw. in dieses hineingeschraubt. Da der Magnetkopf über den Magnetkopfträger an der Achse befestigt ist, wird dieser entsprechend in Richtung der Achse verschoben und dabei auf verschiedene Spuren des Magnetbandes positioniert.

Die bekannte Anordnung ist nicht für Magnetbandgeräte vorgesehen, die eine besonders geringe Bauhöhe aufweisen. Außerdem weist die Anordnung infolge einer nur einseitigen Lagerung der Achse ein, wenn auch nur geringes Spiel auf.

Aus der JP-A-5 245 915 ist ebenfalls eine Anordnung zum Positionieren eines Magnetkopfs in einem Magnetbandgerät bekannt, bei der der Magnetkopf auf einem Magnetkopfträger angeordnet ist und unter verwendung eines Schraubengetriebes längs einer Achse positioniert wird. Das Schraubengetriebe besteht bei dieser bekannten Anordnung aus einem ersten Zahnrad mit einem Innengewinde und einem zugehörigen Außengewinde an der Achse. Der Antrieb des ersten Zahnrads erfolgt über ein mit dem ersten Zahnrad in Eingriff stehendes zweites Zahnrad, das durch einen Antriebsmotor angetrieben wird. Das zweite Zahnrad weist dabei in axialer Richtung eine Dikke auf, die mindestens so groß ist wie der Weg, den der Magnetkopfträger beim Positionieren zurücklegen kann.

Diese bekannte Anordnung ist ebenfalls nicht für Magnetbandgeräte mit einer besonders geringen Bauhöhe geeignet, da sich der Antriebsmotor parallel zur Achse des Magnetkopfträgers nach oben hin erstreckt. Außerdem weist diese bekannte Anordnung ebenfalls nur eine einseitige Lagerung der Achse auf, wodurch ein Spiel auftreten kann und die Achse sich bei einem Verbiegen der Grundplatten neigen kann, so daß eine genaue Positionierung nicht immer möglich ist.

Der Erfindung liegt daher die Aufgabe zugrunde, eine Anordnung zum Positionieren eines Magnetkopfs anzugeben, die einerseits eine besonders geringe Bauhöhe aufweist und eine hohe Positioniergenauigkeit sicherstellt und die trotzdem mit geringem Aufwand austauschbar und justierbar ist.

Erfindungsgemäß wird die Aufgabe bei der Anordnung der eingangs genannten Art durch die im kennzeichnenden Teil des Patentanspruchs 1 angegebenen Merkmale gelöst.

Die Anordnung gemäß der Erfindung hat den Vorteil, daß sowohl die Herstellungskösten als auch der Montageaufwand und insbesondere der Justierungsaufwand bei einem Austauschen des Magnetkopfträgers möglichst gering gehalten werden kann. Beim Austauschen des Magnetkopfträgers muß lediglich die lösbare Verbindung getrennt werden. Durch ein Abbiegen der Lagerplatte kann die Achse des Magnetkopfträgers aus einer Bohrung in der Lagerplatte herausgenommen werden. Nach dem Einsetzen eines neuen Magnetkopfträgers wird die lösbare Verbindung wieder befestigt, ohne daß eine neue Justierung erforderlich ist.

Weiterhin hat die Anordnung gemäß der Erfindung den Vorteil, daß sie in Magnetbandgeräten mit besonders geringen Abmessungen eingesetzt werden kann. Infolge der gestellfesten Anordnung der Achse und einer Lagerung des Magnetkopfträgers an möglichst weit auseinanderliegenden Punkten wird eine große Positioniergenauigkeit und ein besonders geringes Spiel erreicht. Der Magnetkopfträger kann auf einfache Weise geschwenkt werden, so daß die Anordnung in Magnetbandgeräten verwendet werden kann, bei denen das Magnetband in Kassetten enthalten ist und diese Kassetten nicht in Querrichtung, sondern in Längsrichtung in das Magnetbandgerät eingeschoben werden. Diese Magnetbandgeräte weisen somit nicht nur in vertikaler Richtung, sondern auch in Querrichtung besonders geringe Abmessungen auf. Die Anordnung ist auch für die Verwendung von Kassetten geeignet, bei denen der dem Magnetkopf zugängliche Bereich durch eine Staubkappe abdeckbar ist. In diesem Fall wird der Magnetkopf in seiner Arbeitsstellung hinter die geöffnete Staubkappe geschwenkt.

Eine besonders gute Lagerung des Magnetkopfträgers wird erreicht, wenn dieser sowohl oberhalb als auch unterhalb des Schneckenrads auf der Achse gelagert ist. Um ein möglichst geringes Spiel zwischen dem Magnetkopfträger und dem Schneckenrad zu erreichen, ist es günstig, wenn eine Druckfeder vorgesehen ist, die konzentrisch zur Achse angeordnet ist und den Magnetkopfträger gegen das Schneckenrad drückt. Zweckmäßigerweise wird die Druckfeder derartig ausgebildet, daß sie eine Torsionskraft aufweist und den Magnetkopfträger in der Arbeitsstellung des Magnetkopfs gegen einen Anschlag drückt, um ein Schwenken während der Drehung des Schneckenrads zu verhindern.

Der Magnetkopfträger ist im Bereich der Achse vorzugsweise ähnlich einem Hohlzylinder ausge-

bildet, der im Bereich des Schneckenrads eine Ausnehmung für den Antrieb durch die Schnecke aufweist. Im Bereich des Magnetkopfs ist der Magnetkopfträger zweckmäßigerweise als Z-förmiger Winkel ausgebildet, an dessen einem Schenkel der Magnetkopf angeordnet ist und dessen anderer Schenkel am Hohlzylinder angeordnet ist.

Für die Schwenkbewegung des Magnetkopfträgers in eine Ruhestellung ist es günstig, wenn er einen Ansatz enthält, an dem ein Zugmittel befestigbar ist. Dieses Zugmittel ist vorzugsweise als Zugfeder ausgebildet, deren anderes Ende an einem Deckel des Magnetbandgeräts befestigt ist, so daß beim Öffnen des Deckels der Magnetkopf in seine Ruhestellung geschwenkt wird.

Im folgenden wird ein Ausführungsbeispiel der Anordnung gemäß der Erfindung anhand von Zeichnungen näher erläutert. Es zeigen

Fig. 1 eine perspektivische Darstellung der Anordnung,

Fig. 2 einen Querschnitt der Anordnung,

Fig. 3 eine Draufsicht der Anordnung.

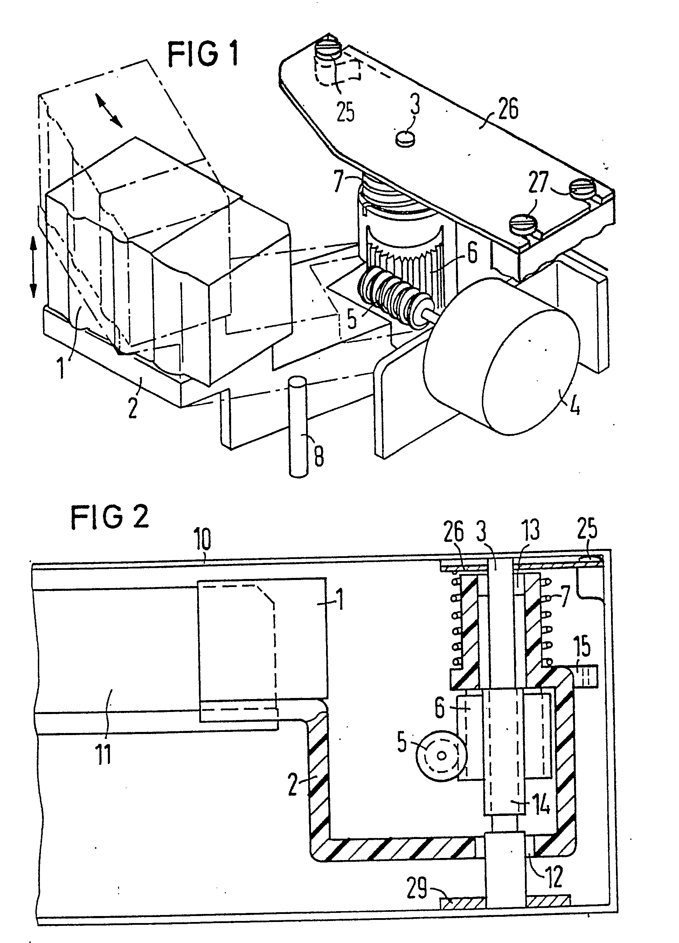

Bei der in Fig. 1 dargestellten Anordnung ist ein Magnetkopf 1 auf einem Magnetkopfträger 2 befestigt. Der Magnetkopfträger 2 ist in axialer Richtung einer Achse 3 verschiebbar, so daß der Magnetkopf 1 auf verschiedene Spuren eines nicht dargestellten Magnetbands positioniert werden kann. Die Verschiebung erfolgt unter Verwendung eines Antriebsmotors 4, der ein aus einer Schnecke 5 und ein Schneckenrad 6 gebildetes Schneckengetriebe und ein aus dem Schneckenrad 6 und der Achse 3 gebildetes Schraubgetriebe antreibt.

Bei einer Drehung der Achse des Antriebsmotors 4, der vorzugsweise als Schrittmotor ausgebildet ist, wird über die Schnecke 5 das Schneckenrad 6 gedreht. Das Schneckenrad 6 weist ein Innengewinde auf, das mit einem Außengewinde auf der Achse 3 im Bereich des Schneckenrads 6 in Wirkverbindung steht. Die Achse 3 ist gestellfest angeordnet, so daß sich bei der Drehung des Schneckenrads 6 dieses, in Abhängigkeit von der Drehrichtung der Schnecke 5 nach oben oder nach unten bewegt. Der Berührungspunkt zwischen der Schnecke 5 und dem Schneckenrad 6 führt dabei eine spiralförmige Bewegung durch. Die Magnetkopfhalterung 2 ist im Bereich der Achse ähnlich einem Hohlzylinder ausgebildet, der im Bereich des Schneckenrads 6 eine Ausnehmung für die Antrieb durch die Schnecke 5 aufweist. Der Magnetkopfträger 2 wird durch eine Druckfeder 7 gegen das Schneckenrad 6 gedrückt. Die Druckfeder 7 ist gleichzeitig als Torsionsfeder ausgebildet und drückt den Magnetkopfträger 2 gegen einen Anschlag 8 und verhindert auf diese Weise eine Drehung oder Schwenkung des Magnetkopfträgers 2 infolge der Drehung des Schneckenrads 6. Gleichzeitig mit der axialen Bewegung des Schneckenrads 6 während seiner Drehung wird der Magnetkopfträger 2 und damit auch der Magnetkopf 1 nach oben oder unten verschoben. Durch eine entsprechende Anzahl von Ansteuerimpulsen für den Schrittmotor 4 kann der Magnetkopf 1 somit auf unterschiedliche Spuren des Magnetbands positioniert werden.

Zum Schwenken des Magnetkopfs 1 von seiner Arbeitsstellung in eine Ruhestellung kann am Magnetkopfträger 2 ein Zugmittel befestigt sein, das zweckmäßigerweise als Zugfeder ausgebildet ist. Das andere Ende der Zugfeder kann beispielsweise an einem Deckel des Gehäuses befestigt sein, so daß beim Öffnen des Deckels der Magnetkopf in seine Ruhestellung geschwenkt wird. Das Zugmittel überwindet dabei die Torsionskraft der Druckfeder 7. Die Schwenkbarkeit des Magnetkopfs 1 zwischen einer Arbeitsstellung und einer Ruhestellung erweist sich insbesondere dann als vorteilhaft, wenn die Anordnung in einem Magnetbandgerät verwendet wird, das Magnetbandkassetten benutzt und bei dem die Kassetten nicht in Querrichtung, sondern in Längsrichtung in das Magnetbandgerät hineingeschoben werden. In diesem Fall muß während des Einschiebens und Herausnehmens der Kassette der Magnetkopf 1 aus einer entsprechenden Öffnung der Kassette herausgenommen werden.

Die Befestigung des Magnetkopfträgers 2 erfolgt über dessen Achse 3 im Magnetbandgerät. Die Achse 3 ist an ihrem unteren Ende in einer Lagerplatte 29 gestellfest, insbesondere formschlüssig angeordnet, um eine Drehung zu vermeiden. An ihrem oberen Ende ist die Achse 3 durch eine Bohrung einer Lagerplatte 26 hindurchgesteckt. Die Lagerplatte 26 besteht vorzugsweise aus federndem Material und ist an ihrem einen Ende durch Schrauben 27 mit dem Magnetbandgerät fest verbunden. An der Stelle der Schrauben 27 weist die Lagerplatte 26 Langlöcher auf, so daß ein Justieren des Magnetkopfträgers 2 und somit des Magnetkopfs 1 über ein Verschieben der Bohrung in der Lagerplatte 26 ermöglicht wird. Nach der genauen Justierung wird die Lagerplatte 26 durch die Schrauben 27 fest mit dem Magnetbandgerät verbunden. Am anderen Ende der Lagerplatte 26 ist eine lösbare Verbindung, insbesondere unter Verwendung einer Schraube 25 vorgesehen. Nach dem Einschrauben der Schraube 25 ist die Anordnung betriebsbereit.

Der Magnetkopf 1 muß infolge von Verschleiß gelegentlich ausgetauscht werden. Der Austausch erfolgt gemeinsam mit dem Magnetkopfträger 2. Zu diesem Zweck wird die lösbare Verbindung 25 gelöst, die Lagerplatte 26 abgebogen und die Achse 3 aus der entsprechenden Bohrung herausgenommen. Anschließend wird die Achse 3 aus der unteren Lagerplatte herausgenommen und in entsprechender Weise ein neuer Magnetkopfträger 2 eingesetzt. Nach dem erneuten Befestigen der Schraube 25 ist keine weitere Justierung des Magnetkopfs 1 erforderlich.

Bei dem in Fig. 2 dargestellten Querschnitt der Anordnung ist diese in einem Gehäuse 10 untergebracht, das eine besonders geringe Bauhöhe aufweist. Der Magnetkopf 1 ist in seiner Arbeitsstellung dargestellt und er greift in eine Öffnung einer Kassette 11 ein, die das Magnetband enthält.

Die Magnetkopfhalterung 2 ist unter Verwendung von zwei Lagern 12 und 13 sowohl verschiebbar als auch schwenkbar auf der Achse 3 gelagert. Falls die Schwenkbarkeit des Magnetkopfträgers 2 nicht erwünscht oder nicht erforderlich ist, können die Lager selbstverständlich derart ausgebildet sein, daß nur eine Verschiebung in axialer Richtung möglich ist. Die Achse 3 weist im Bereich des Schneckenrads 6 das Außengewinde 14 auf, das mit dem Innengewinde des Schneckenrads 6 in Wirkverbindung steht. Wenn sich die Schnecke 5 dreht, wird das Schneckenrad 6 angetrieben, so daß dieses sich in axialer Richtung bewegt. Die Druckfeder 7 drückt den Magnetkopfträger 2 gegen das Schneckenrad 6, so daß dieser der Bewegung des Schneckenrads 6 in axialer Richtung folgt und damit den Magnetkopf 1 auf verschiedene Spuren des Magnetbands positioniert.

Die Achse 3 ist an der Grundplatte des Gehäuses 10 in einer Lagerplatte 29 gelagert und am anderen Ende in einer Ausnehmung der Lagerplatte 26 gelagert, vorzugsweise durch eine Bohrung der Lagerplatte 26 hindurchgesteckt.

An der dem Magnetkopf 1 abgewandten Seite des Magnetkopfträgers 2 ist ein Ansatz 15 angeordnet, an dem das Zugmittel 9 angreift, um den Magnetkopf 1 beim Einschieben oder Herausnehmen der Kassette 11 aus dem Magnetbandgerät von seiner Arbeitsstellung in seine Ruhestellung zu schwenken.

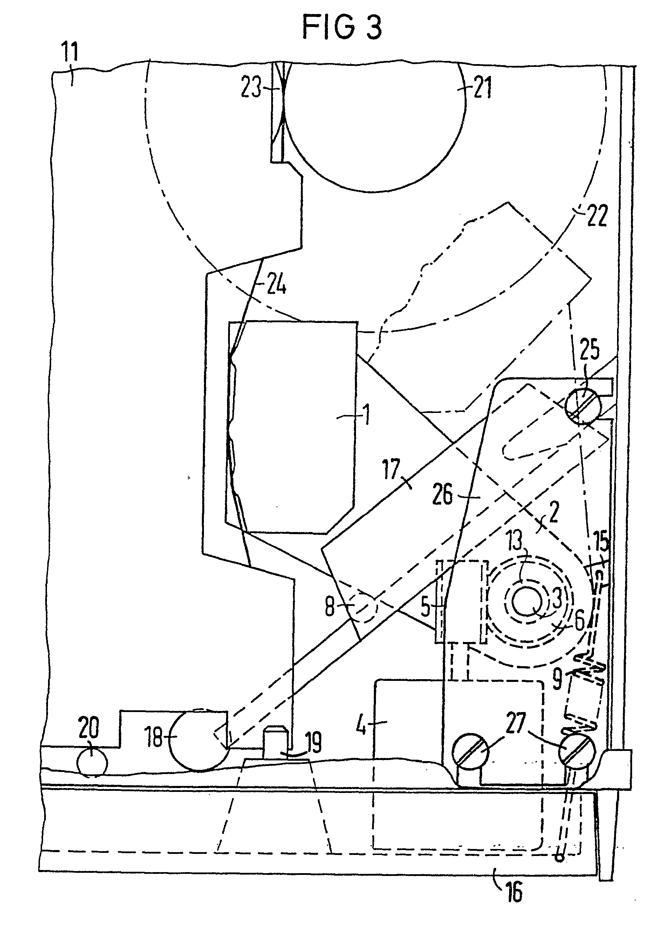

Bei der in Fig. 3 dargestellten Draufsicht ist der auf dem Magnetkopfträger 2 befestigte Magnetkopf 1 in seiner Arbeitsstellung gezeigt, in der er in eine Öffnung der Kassette 11 mit einem Magnetband 24 eingreift. Die Kassette 11 ist in Längsrichtung in das Magnetbandgerät hineingeschoben. Vor dem Hineinschieben wird ein Deckel 16 des Gehäuses 10 geöffnet. Während des Hineinschiebens der Kassette 11 wird selbsttätig eine Staubkappe 17 aus der Kassette 11 herausgeklappt. Während des Schließens des Deckels 16 wird das Zugmittel 9 entspannt und der Magnetkopf 1 wird durch die Torsionskraft der Druckfeder 7 hinter der Staubkappe 17 in die Öffnung der Kassette 11 hineingeschwenkt. Nach dem Schließen des Deckels 16 ist die Kassette in ihrer endgültigen Arbeitslage verrastet. Die Verrastung erfolgt durch drei federnd gelagerte Kugeln, von denen nur die Kugle 18 dargestellt ist. Als Bezugspunkte für eine definierte Position der Kassette 11 dienen Stifte, von denen nur die Stifte 19 und 20 dargestellt sind. Der Antrieb des Magnetbands 24 erfolgt unter Verwendung einer Bandantriebsrolle 21, die von einem Bandantriebsmotor 22 angetrieben wird und das Magnetband 24 gegen eine Andruckrolle 23 drückt.

Nachdem sich der Magnetkopf 1 in seiner Arbeitsstellung befindet, wird er mittels des Antriebsmotors 4 in der beschriebenen Weise auf die gewünschte Spur oder bei einer mehrspurigen Ausführung des Magnetkopfs 1 auf die gewünschten Spuren positioniert.

Vor dem Herausnehmen der Kassette 11 wird der Deckel 16 wieder geöffnet, wodurch über das Zugmittel 9 der Magnetkopf 1 wieder in seine gestrichelte dargestellte Ruhestellung geschwenkt wird. Durch eine Feder wird die Kassette 11 teilweise aus dem Magnetbandgerät herausgeschoben und gleichzeitig wird die Staubkappe 17 wieder in die Öffnung der Kassette 11 hineingeklappt. Die Kassette 11 kann anschließend dem Magnetbandgerät entnommen werden.

**Patentansprüche**

1. Anordnung zum Positionieren eines Magnetkopfs (1) auf verschiedene Spuren eines Magnetbands, bei der der Magnetkopf (1) auf einem an einer Achse (3) angeordneten Magnetkopfträger (2) befestigt ist und unter Verwendung eines Schneckengetriebes (5, 6) und eines Schraubengetriebes positioniert wird, wobei das Schneckengetriebe (5, 6) aus einer durch einen Antriebsmotor (4) angetriebenen Schnecke (5) und einem zugeordneten Schneckenrad (6) gebildet wird und wobei das Schraubengetriebe aus einem Innengewinde des Schneckenrads (6) und einem zugehörigen Außengewinde (14) an der Achse (3) gebildet wird, dadurch gekennzeichnet, daß die Achse (3), in axialer und radialer Richtung festgelegt, an ihrem einen Ende am Gehäuse (10) und an ihrem anderen Ende mittels einer Lagerplatte (26) befestigt ist, die aus federndem Material besteht und an ihrem einen Ende, bei vorbestimmter Lagezuordnung zum Gehäuse (10), unverschiebbar und an ihrem anderen Ende lösbar mit dem Gehäuse (10) verbunden ist, daß der Magnetkopfträger (2) auf der Achse (3) verschiebbar angeordnet, kraftschlüßig mit dem Schneckenrad (6) verbunden und während der Drehung des Schneckenrads (6) drehgesichert ist, so daß er der axialen Bewegung des Schneckenrads (6) folgt und daß das Schneckenrad (6) in seiner axialen Richtung eine Dicke aufweist, die größer ist als der Weg, um den der Magnetkopfträger (2) längs der Achse (3) bewegbar ist.

2. Anordnung nach Anspruch 1, dadurch gekennzeichnet, daß der Magnetkopfträger (2) oberhalb und unterhalb des Schneckenrads (6) auf der Achse (3) gelagert ist.

3. Anordnung nach Anspruch 1 oder Anspruch 2, dadurch gekennzeichnet, daß der Magnetkopfträger (2) verschiebbar und schwenkbar auf der Achse (3) gelagert ist.

4. Anordnung nach einem der Ansprüche 1 bis 3, dadurch gekennzeichnet, daß konzentrisch zur Achse (3) eine Druckfeder (7) angeordnet ist, die den Magnetkopfträger (2) gegen das Schneckenrad (6) drückt.

5. Anordnung nach Anspruch 4, dadurch gekennzeichnet, daß die Druckfeder (7) gleichzeitig als Torsionsfeder ausgebildet ist, die zur Drehsicherung den Magnetkopfträger (2) gegen einen Anschlag (8) drückt.

6. Anordnung nach Anspruch 5, dadurch gekennzeichnet, daß die Lagerplatte (26) eine Bohrung aufweist, durch die die Achse (3) des Magnetkopfträgers (2) hindurchragt.

7. Anordnung nach Anspruch 5 oder Anspruch 6, dadurch gekennzeichnet, daß die unverschiebbare Verbindung und die lösbare Verbindung durch Schrauben (25, 27) erfolgt, und daß die Lagerplatte (27) im Bereich der unverschiebbaren und der lösbaren Verbindung Langlöcher aufweist.

8. Anordnung nach einem der Ansprüche 1 bis 5, dadurch gekennzeichnet, daß der Magnetkopfträger (2) im Bereich der Achse (3) ähnlich einem Hohlzylinder ausgebildet ist, der im Bereich des Schneckenrads (6) eine Ausnehmung für den Antrieb des Schneckenrads (6) aufweist und im Bereich des Magnetkopfs (1) ähnlich einem doppelten Winkel ausgebildet ist, an dessen einem Schenkel der Magnetkopf (1) angeordnet ist und dessen anderer Schenkel an einem Ende des Hohlzylinders angeordnet ist.

9. Anordnung nach einem der Ansprüche 1 bis 5, dadurch gekennzeichnet, daß am Magnetkopfträger (2) ein Ansatz (15) für ein Zugmittel (9) vorgesehen ist, durch dessen Betätigung der Magnetkopfträger (2) schwenkbar ist.

## Claims

1. Arrangement for positioning a magnetic head (1) on various tracks of a magnetic tape, in which the magnetic head (1) is fastened on a magnetic head carrier (2), arranged on a spindle (3), and is positioned by using a worm gear (5, 6) and a screw gear, the worm gear (5, 6) being formed from a worm (5), driven by a drive motor (4), and an assigned worm wheel (6), and the screw gear being formed by an internal thread of the worm wheel (6) and an assigned external thread (14) on the spindle (3), characterized in that the spindle (3), fixed in an axial and radial direction is fastened at its one end to the housing (10) and at its other end by means of a bearing plate (26), which consists of resilient material and is connected undisplaceably at its one end, with predetermined positional assignment to the housing (10), and releasably at its other end to the housing (10), in that the magnetic head carrier (2) is arranged displaceably on the spindle (3), is connected non-positively to the worm wheel (6) and is rotationally secured during the rotation of the worm wheel (6), so that it follows the axial movement of the worm wheel (6) and in that the worm wheel (6) has in its axial direction a thickness which is greater than the distance by which the magnetic head carrier (2) can move along the spindle (3).

2. Arrangement according to Claim 1, characterized in that the magnetic head carrier (2) is mounted above and below the worm wheel (6) on the spindle (3).

3. Arrangement according to Claim 1 or Claim 2, characterized in that the magnetic head carrier (2) is mounted displaceably and pivotally on the spindle (3).

4. Arrangement according to Claims 1 to 3, characterized in that a compression spring (7), which presses the magnetic head carrier (2) against the worm wheel (6), is arranged concentrically to the spindle (3).

5. Arrangement according to Claim 4, characterized in that the compression spring (7) is designed at the same time as torsion spring, which presses the magnetic head carrier (2) against a stop (8) for rotational securing.

6. Arrangement according to Claim 5, characterized in that the bearing plate (26) has a bore, through which the spindle (3) of the magnetic head carrier (2) protrudes.

7. Arrangement according to Claim 5 or 6, characterized in that the undisplaceable connection and the releasable connection are made by screws (25, 27), and in that the bearing plate (27) has slots in the region of the undisplaceable connection and the releasable connection.

8. Arrangement according to one of Claims 1 to 5, characterized in that the magnetic head carrier (2) is designed in the region of the spindle (3) similarly to a hollow cylinder, which has in the region of the worm wheel (6) a recess for the drive of the worm wheel (6) and is designed in the region of the magnetic head (1) similarly to a double angle, on the one leg of which the magnetic head (1) is arranged and the other leg of which is arranged at one end of the hollow cylinder.

9. Arrangement according to one of Claims 1 to 5, characterized in that an attachment (15) for a tensioning means (9) is provided on the magnetic head carrier (2), by the actuation of which means the magnetic head carrier (2) can be pivoted.

## Revendications

1. Dispositif pour positionner une tête magnétique (1) sur différentes pistes d'une bande magnétique, et dans lequel la tête magnétique (1) est fixée sur un support (2) de la tête magnétique, monté sur un axe (3), et est positionné moyennant l'utilisation d'une transmission à vis sans fin (5, 6) et d'un mécanisme à vis, et dans lequel la transmission à vis sans fin (5, 6) est constituée par une vis sans fin (5) entraînée par un moteur d'entraînement (4), et par une roue tangente associée (6) et le mécanisme à vis est formé par un taraudage de la roue tangente (6) et un filetage extérieur associé (14) présent sur l'axe (3), caractérisé par le fait que l'axe (3), qui est bloqué dans les directions axiale et radiale, est fixé, au niveau de l'une de ses extrémités, sur le carter (10) et, au niveau de son autre extrémité, à l'aide d'une plaque de support (26), qui est réalisée en un matériau élastique et est reliée, par l'une de ses extrémités, dans une position fixe, pour une association prédéterminée de position par rapport au carter (10), et, par son autre extrémité, de façon amovible au carter (10), que le support (2) de la tête magnétique est monté de manière à être déplaçable sur l'axe (3), est relié selon une liaison de force à la roue tangente (6) et est bloqué en rotation pendant la rotation de la roue tangente (6) de telle sorte que le support de la tête magnétique suit le déplacement axial de la roue tangente (6), et que la roue tangente (6) possède, dans sa direction axiale, une épaisseur supérieure au trajet, sur lequel le support (2) de la tête magnétique est déplaçable le long de l'axe (3).

2. Dispositif suivant la revendication 1, caractérisé par le fait que le support (2) de la tête magnétique est supporté par l'axe (3) au-dessus et au-dessous de la roue tangente (6).

3. Dispositif suivant la revendication 1 ou 2, caractérisé par le fait que le support (2) de la tête magnétique est supporté par la roue (3) de manière à être déplaçable en translation et à pouvoir pivoter.

4. Dispositif suivant l'une des revendications 1 à 3, caractérisé par le fait qu'un ressort de pression (7), qui repousse le support (2) de la tête magnétique contre la roue tangente (6), est monté concentriquement par rapport à l'axe (3).

5. Dispositif suivant la revendication 4, caractérisé par le fait que le ressort de pression (7) est réalisé aussi sous la forme d'un ressort de torsion, qui, pour le blocage en rotation, repousse le support (2) de la tête magnétique contre une butée.

6. Dispositif suivant la revendication 5, caractérisé par le fait que la plaque de support (26) possède un perçage qui traverse l'axe (3) du support (2) de la tête magnétique.

7. Dispositif suivant la revendication 5 ou 6, caractérisé par le fait que la liaison fixe et la liaison amovible sont réalisées à l'aide de vis (25, 27), et que la plaque de support (27) possède des trous allongés au voisinage de la liaison fixe et de la liaison amovible.

8. Dispositif suivant l'une des revendications 1 à 5, caractérisé par le fait que le support (2) de la tête magnétique est agencé, au niveau de l'axe (3), à la manière d'un cylindre creux qui possède, au voisinage de la roue tangente (6), un évidement pour le dispositif d'entraînement de cette roue tangente (6), et est agencé, au voisinage de la tête magnétique (1), à la manière d'une équerre double, sur une branche de laquelle est disposée la tête magnétique (1) et sur une extrémité de l'autre branche de laquelle se trouve disposé le cylindre creux.

9. Dispositif suivant l'une des revendications 1 à 5, caractérisé par le fait que sur le support (2) de la tête magnétique est prévu un appendice saillant (15) pour un moyen de traction (9), grâce à l'actionnement duquel le support (2) de la tête magnétique peut pivoter.

## FIG 1

## FIG 2

# FIG 3